# EUROPEAN PATENT SPECIFICATION

(11) **EP 0 955 203 B1**
(45) Date of publication and mention of the grant of the patent: **02.11.2005**
(21) Application number: 99200958.9
(22) Date of filing: 29.03.1999
(51) Int. Cl.: B60N 2/44

(54) **Load sensing mounting for a vehicle seat**
Lastenfühleinrichtung für Fahrzeugsitze
Montage d' un détecteur de charge pour sièges de véhicules

(30) Priority: 05.05.1998 GB 9809452
(43) Date of publication of application: 10.11.1999
(73) Proprietor: Delphi Technologies, Inc., Troy, MI 48007 (US)
(72) Inventor: Lenz, Axel P., Solingen 42657 (DE); Nilson, Hans Gert, Wuppertal 42369 (DE)
(74) Representative: Denton, Michael John

(56) References cited:
- EP-A- 0 802 093
- WO-A-98/30411
- US-A- 3 672 699
- US-A- 5 232 243
- US-A- 5 739 757
- PATENT ABSTRACTS OF JAPAN vol. 1998, no. 03, 27 February 1998 (1998-02-27) & JP 09 301120 A (TOYODA GOSEI CO LTD), 25 November 1997 (1997-11-25)

## Description

### Technical Field

The present invention relates to a load sensing mounting for a seat of a motor vehicle.

### Background of the Invention

Adaptive restraint systems in motor vehicles are designed to operate when the presence of an occupant is detected in a seat in the vehicle. Such known detection systems include the use of pressure pads positioned in the seat cushion. Known pressure pads can be based on gas, fluid, or solid state substrates. The use of such pressure pads raises concerns about seat comfort, seat durability, and possible leakage of gas or fluid. Pressure pads based on solid state substrates, such as pressure sensitive ink, further cause problems during seat manufacture, and can be sensitive to vapour or moisture penetration. Still further, such pressure pads do not provide an accurate indication of the weight of an occupant. Document US 5,232,243, which constitutes the closest prior art, shows such a system.

### Summary of the Invention

It is an object of the present invention to overcome the above mentioned problem.

A load sensing mounting in accordance with the present invention for mounting a vehicle seat in a motor vehicle comprises a frame member for the vehicle seat; a mounting bracket for securing in the motor vehicle; a bearing bracket on one of the mounting bracket or the frame member and having a guideway extending in a substantially vertical direction; a bolt secured to the other of the mounting bracket or the frame member, the bolt having a shank which extends through an aperture in said one of the mounting bracket or the frame member and into the guideway of the bearing bracket, the aperture having a predetermined clearance in a substantially vertical direction relative to the shank of the bolt; a resilient plate secured to the bearing bracket across the guideway and engaging the shank of the bolt; and a strain sensing element mounted on the resilient plate on the opposed side to the shank of the bolt.

The present invention can provide a more accurate determination of the mass of a seat occupant for better control of an adaptive restraint system associated with the seat. The present invention does not require mounting in the cushion of the seat and so has no adverse effects on seat comfort and/or durability.

### Brief Description of the Drawings

The present invention will now be described, by way of example, with reference to the accompanying drawings, in which:-
Figure 1 is a side view of a seat of a motor vehicle having four load sensing mountings, one at each corner, in accordance with the present invention;
Figure 2 is an enlarged side view of one of the load sensing mountings of Figure 1; and
Figure 3 is a cross-sectional view on the line A-A of Figure 2.

### Description of the Preferred Embodiment

Referring to the drawings, a seat 10 of a motor vehicle is mounted on a pair of rails 12 in the vehicle by four load sensing mountings 14 in accordance with the present invention. The number of load sensing mountings 14 is dependent on the design of the seat 10. The seat 10 comprises a seat cushion 16 and a seat back 18. Each load sensing mounting 14 provides a connection between the seat 10 and one of the rails 12 and includes a seat frame 20 on which the cushion 16 is mounted, and a mounting bracket 22 which is attached to one of the rails 12.

Each load sensing mounting 14 comprises a substantially U-shaped bearing bracket 24 which is secured, for example by a weld 26, to the seat frame 20. A bolt 28 has a head 30 which is secured to the mounting bracket 22, and a shank 32 which extends through an aperture 34 in the seat frame 20 and between the arms 36 of the bearing bracket 24. The aperture 34 in the seat frame 20 has an elongate shape with a predetermined clearance in a substantially vertical direction relative to the shank 32 to allow limited relative movement in the vertical direction between the seat frame 20 and the bracket 22. The arms 36 of the bearing bracket 28 define a guideway 37 therebetween for the guiding movement shank 32 of the bolt 28 in a substantially vertical direction. A resilient plate 38 is secured, for example, by screws 40 or a snap fit connection, to the free ends 42 of the arms 36 of the bearing bracket 24 to extend across the guideway 37. The resilient plate 38 engages the shank 32 of the bolt 28 to retain the shank 32 in the guideway 37 between the arms 36 of the bearing bracket 24. A strain sensing element 44 is mounted on the resilient plate 38 on the opposite side of the resilient plate to the shank 32 of the bolt 28.

The strain sensing element 44 may be any suitable element such as a foil, silicon, or thick film strain gauge. The mass of the seat 10 and the mass of an occupant sitting in the seat and/or a child seat positioned in the seat, exerts a force on the shank 32 of the bolt 28. This force creates a reaction on the resilient plate 38 which is sensed by the element 44 which can provide an output signal which is dependent on the mass of the seat 10 and any occupant sitting in the seat. By electrically connecting the element 44 of each load sensing mounting 14 to a suitable electronic control unit (not shown), the control unit can determine both the presence of, and the mass of, an occupant and can provide suitable signals for controlling the operation of an adaptive restraint system (not shown) associated with the seat 10 which are dependent on the determined mass.

The present invention therefore has the advantage that a highly accurate signal can be provided for controlling the operation of an adaptive restraint which is based on the size of an occupant in the seat. Also, the present invention has no influence on seat comfort or durability.

The predetermined clearance between the aperture 34 and the shank 32 of the bolt 28 is determined dependent on the required output from the element 44, the thickness of the resilient plate 38, and any required overload protection for the element 44.

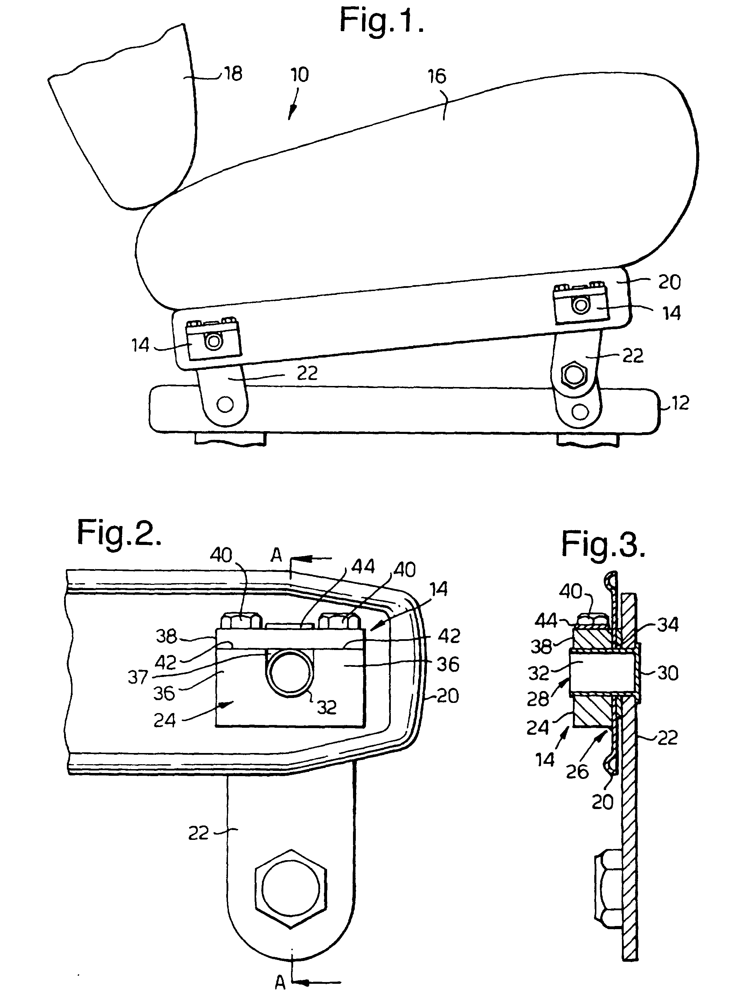

As an alternative to the above described arrangement, the positioning of the bearing bracket 24 and bolt 28 could be reversed, with the bearing bracket being secured to the mounting bracket 22 and the bolt being secured to the seat frame 20. In this case, the aperture 34 would be in the mounting bracket 22, and the bearing bracket 24 would be inverted (compared to Figures 1 to 3) with the resilient plate 38 and strain sensing element 44 positioned below the shank 32 of the bolt 28.

In either of the above described arrangements, the load sensing mounting of the present invention measures any deflection of the resilient plate 38 due to a load being placed in the seat 10, and uses the measured deflection to calculate the mass of the load. The resilient plate 38 may be secured at both ends as shown, or secured at one end only. The resilient plate 38 may be integrally formed with the seat frame 20 or the mounting bracket 22.

The bearing bracket 24 provides the guideway 37 for movement of the shank 32 of the bolt 28. Other suitable shapes for the bearing bracket may be used, or the bearing bracket could be integrally formed on the seat frame 20 or the mounting bracket 22, to provide the required guideway for the shank 32 of the bolt 28.

## Claims

1. A load sensing mounting (14) for mounting a vehicle seat (10) in a motor vehicle comprising a frame member (20) for the vehicle seat; a mounting bracket (22) for securing in the motor vehicle; **characterised by** a bearing bracket (24) on one of the mounting bracket or the frame member and having a guideway (37) extending in a substantially vertical direction; a bolt (28) secured to the other of the mounting bracket or the frame member, the bolt having a shank (32) which extends through an aperture (34) in said one of the mounting bracket or the frame member and into the guideway of the bearing bracket, the aperture having a predetermined clearance in a substantially vertical direction relative to the shank of the bolt; a resilient plate (38) secured to the bearing bracket across the guideway and engaging the shank of the bolt; and a strain sensing element (44) mounted on the resilient plate on the opposed side to the shank of the bolt.

2. A load sensing mounting as claimed in Claim 1, wherein the aperture is in the seat frame; the bearing bracket is on the seat frame; and the bolt is secured to the mounting bracket.

3. A load sensing mounting as claimed in Claim 1 or Claim 2, wherein the resilient plate is secured to the bearing bracket at both ends of the resilient plate.

4. A load sensing mounting as claimed in any one of Claims 1 to 3, wherein the bearing bracket is substantially U-shaped having arms defining the guideway therebetween; and wherein the resilient plate is secured to the bearing bracket to close the guideway.

5. A load sensing mounting as claimed in any one of Claims 1 to 4, wherein the bearing bracket is separately formed and secured to said one of the frame member or the mounting bracket.

6. A load sensing mounting as claimed in any one of Claims 1 to 5, wherein the strain sensing element is a foil, silicon or thick film strain gauge.

## Patentansprüche

1. Kraftmessmontageelement (14) zum Befestigen eines Fahrzeugsitzes (10) in einem Kraftfahrzeug, umfassend:
ein Rahmenelement (20) für den Fahrzeugsitz;
eine Montagestütze (22) zum Befestigen in dem Kraftfahrzeug;
**gekennzeichnet durch**
eine Auflagerstütze (24) an einem von der Montagestütze oder dem Rahmenelement, die eine Führung (37) aufweist, die sich in einer im Wesentlichen vertikalen Richtung erstreckt;
einen Bolzen (28), der an dem anderen von der Montagestütze oder dem Rahmenelement befestigt ist, wobei der Bolzen einen Schaft (32) aufweist, der sich **durch** eine Öffnung (34) in dem einen von der Montagestütze oder dem Rahmenelement und in die Führung der Auflagerstütze hinein erstreckt, wobei die Öffnung einen vorbestimmten Spielraum in einer im Wesentlichen vertikalen Richtung relativ zu dem Schaft des Bolzens aufweist;
eine elastische Platte (38), die über die Führung an der Auflagerstütze befestigt ist und mit dem Schaft des Bolzens in Eingriff steht; und
ein Dehnungsmesselement (44), das an der elastischen Platte an der dem Schaft des Bolzens gegenüberliegenden Seite befestigt ist.

2. Kraftmessmontageelement nach Anspruch 1, wobei die Öffnung in dem Sitzrahmen angeordnet ist; die Auflagerstütze an dem Sitzrahmen angeordnet ist; und der Bolzen an der Montagestütze befestigt ist.

3. Kraftmessmontageelement nach Anspruch 1 oder 2, wobei die elastische Platte an beiden Enden der elastischen Platte an der Auflagerstütze befestigt ist.

4. Kraftmessmontageelement nach einem der Ansprüche 1 bis 3, wobei die Auflagerstütze im Wesentlichen U-förmig ist und Arme aufweist, die die Führung dazwischen definieren; und wobei die elastische Platte an der Auflagerstütze befestigt ist, um die Führung zu schließen.

5. Kraftmessmontageelement nach einem der Ansprüche 1 bis 4, wobei die Auflagerstütze getrennt ausgebildet und an einem von dem Rahmenelement oder der Montagestütze befestigt ist.

6. Kraftmessmontageelement nach einem der Ansprüche 1 bis 5, wobei das Dehnungsmesselement ein Folien-, Silizium- oder Dickfilm-Dehnungsmessstreifen ist.

## Revendications

1. Support à détection de charge (14) pour monter un siège de véhicule (10) dans un véhicule à moteur, comprenant un élément formant cadre (20) pour le siège de véhicule ; une patte de fixation (22) assurant la fixation au véhicule à moteur ; **caractérisé par** une patte de support (24) disposée sur un élément parmi la patte de fixation ou l'élément formant cadre et ayant une glissière (37) qui s'étend dans une direction sensiblement verticale ; un boulon (28) fixé à l'autre élément parmi la patte de fixation ou l'élément formant cadre, le boulon ayant une tige (32) qui traverse une ouverture (34) pratiquée dans ledit un élément parmi la patte de fixation ou l'élément formant cadre et qui pénètre dans la glissière de la patte de support, l'ouverture ayant un jeu prédéterminé dans une direction sensiblement verticale par rapport à la tige du boulon ; une plaque résiliente (38) fixée à la patte de support à travers la glissière et engageant la tige du boulon ; et un élément détecteur de contrainte (44) monté sur la plaque résiliente du côté opposé à la tige du boulon.

2. Support à détection de charge selon la revendication 1, dans lequel l'ouverture est pratiquée dans le cadre du siège ; la patte de support est disposée sur le cadre du siège ; et le boulon est fixé à la patte de fixation.

3. Support à détection de charge selon la revendication 1 ou la revendication 2, dans lequel la plaque résiliente est fixée à la patte de support aux deux extrémités de la plaque résiliente.

4. Support à détection de charge selon l'une quelconque des revendications 1 à 3, dans lequel la patte de support a sensiblement une forme de U entre les bras duquel se forme la glissière ; et dans lequel la plaque résiliente est fixée à la patte de support pour fermer la glissière.

5. Support à détection de charge selon l'une quelconque des revendications 1 à 4, dans lequel la patte de support est formée séparément et fixée audit un élément parmi l'élément formant cadre ou la patte de fixation.

6. Support à détection de charge selon l'une quelconque des revendications 1 à 5, dans lequel l'élément détecteur de contrainte est une jauge de contrainte à feuille, à silicium ou à couche épaisse.
